# FASCICULE DE BREVET EUROPEEN

(11) **EP 0 425 329 B1**
(45) Date de publication et mention de la délivrance du brevet: **16.03.1994**
(21) Numéro de dépôt: 90402691.1
(22) Date de dépôt: 28.09.1990
(51) Int. Cl.: B62D 5/06, F15B 15/20

(54) **Vérin hydraulique à force de poussée variable et dispositif de direction assistée pour véhicules automobiles, équipé d'un tel vérin**
Hydraulischer Zylinder mit veränderbarer Druckkraft und Lenkhilfe für ein mit solch einem Zylinder ausgestattetes Kraftfahrzeug
Hydraulic cylinder with variable compressive force and power steering device for an automotive vehicle equipped with such a cylinder

(30) Priorité: 23.10.1989 FR 8913846
(43) Date de publication de la demande: 02.05.1991
(73) Titulaire: AUTOMOBILES PEUGEOT, 75116 Paris (FR); AUTOMOBILES CITROEN, 92200 Neuilly-sur-Seine (FR)
(72) Inventeur: Halconruy, Thierry, F-78000 Versailles (FR)
(74) Mandataire: Berger, Helmut

(56) Documents cités:
- EP-A- 0 316 235
- DE-A- 2 610 876
- DE-C- 929 996
- DE-U- 8 905 411
- FR-A- 1 337 675
- FR-A- 1 480 670
- FR-A- 2 095 145

## Description

L'invention concerne un vérin à force de poussée variable du type décrit dans le préambule de la revendication principale et un dispositif de direction assisté pour véhicule utilisant un tel vérin.

Un vérin hydraulique du type décrit dans le préambule de la revendication 1 est déjà connu par le document FR-A-1 480 670. Dans ce vérin hydraulique connu, l'organe commandé pour assurer la mise en communication des deux chambres est piloté par le fluide sous pression destiné à alimenter le vérin. Le vérin connu présente l'inconvénient que le pilotage de l'organe commandé est dépendant de l'alimentation du vérin en fluide sous pression.

La présente invention a pour objectif de proposer un vérin du type décrit plus haut, qui ne présente pas l'inconvénient de l'état de la technique, qui vient d'être énoncé.

Pour atteindre ce but, le vérin hydraulique selon l'invention comprend les caractéristiques qui figurent dans la partie caractérisante de la revendication principale.

Concernant le dispositif de direction assisté, proposé par l'invention, il est caractérisé conformément à la partie caractérisante de la revendication 4.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels:

La figure 1 est une vue partiellement en coupe axiale d'un vérin hydraulique selon l'invention.

Les figures 2 et 3 sont deux vues en coupe axiale, avec arrachement et à plus grande échelle, de l'extrémité du vérin selon la figure 1, qui est configurée en tête de vérin, les figures 2 et 3 montrant l'organe de mise en communication en deux positions différentes, sous l'effet d'un mode de réalisation des moyens de commande qui n'est pas conforme à la présente invention.

La figure 4 est une vue similaire à celle de la figure 2, mais montre un mode de réalisation des moyens de commande de l'organe de mise en communication, qui est conforme à l'invention.

La figure 5 montre schématique l'application d'un vérin selon la figure 1 à 4 pour la réalisation d'un dispositif de direction assistée pour véhicules automobiles.

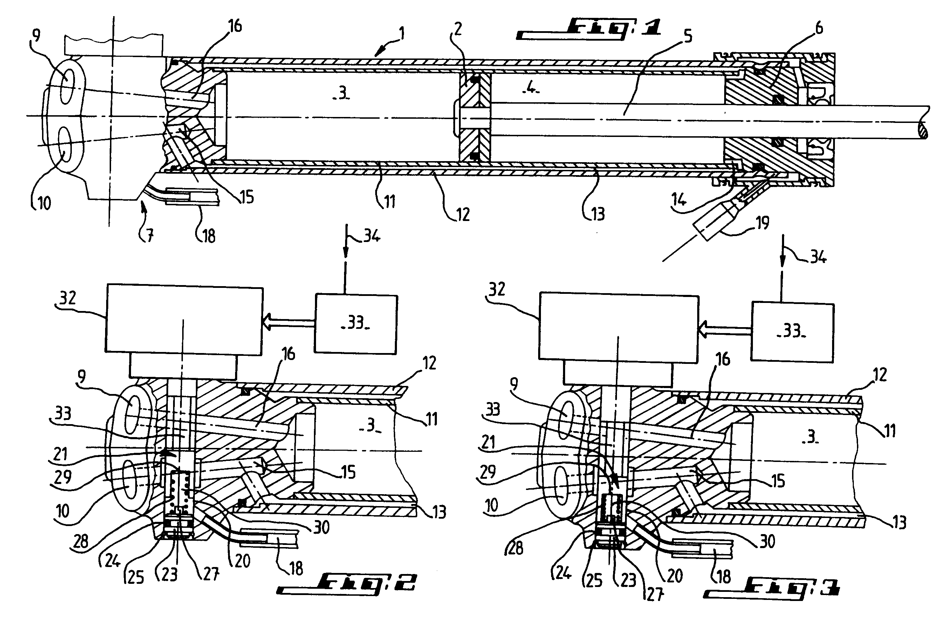

En se référant à la figure 1, on constate qu'un vérin hydraulique selon l'invention comprend un corps de vérin 1 à l'intérieur duquel est monté axialement mobile un piston 2 qui délimite dans ce corps 1 deux chambres séparées 3 et 4 chacune susceptible d'être alimenté en fluide sous pression. Le piston 2 est muni d'une tige de piston 5 qui traverse axialement la chambre 4 et l'extrémité correspondante 6 du vérin. L'autre extrémité 7 du vérin est configurée en tête de vérin et porte les raccords externes 9, 10 des chambres 3 et 4, par lesquels celles-ci sont reliées à un circuit hydraulique externe.

Le corps de vérin 1 comporte deux éléments cylindres coaxiaux radialement interne 11 et externe 12. Ces éléments cylindriques délimitent entre eux un espace annulaire 13 qui communique au niveau de l'extrémité 6 du vérin, en 14, avec la chambre 4. Un conduit 15 pratiqué dans la tête de vérin 7 relie l'espace 13 au niveau de la tête de vérin 7 au raccord externe 10. Un autre conduit 16 également usiné dans la tête de vérin 7 relie le raccord 9 à la chambre 3. La tête 7 et l'extrémité 6 présentent des surfaces de portées coaxiales appropriées de maintien en position coaxiale des deux éléments cylindriques 11 et 12. En 18 et 19 on a représenté des raccords de retour de fuite du circuit hydraulique.

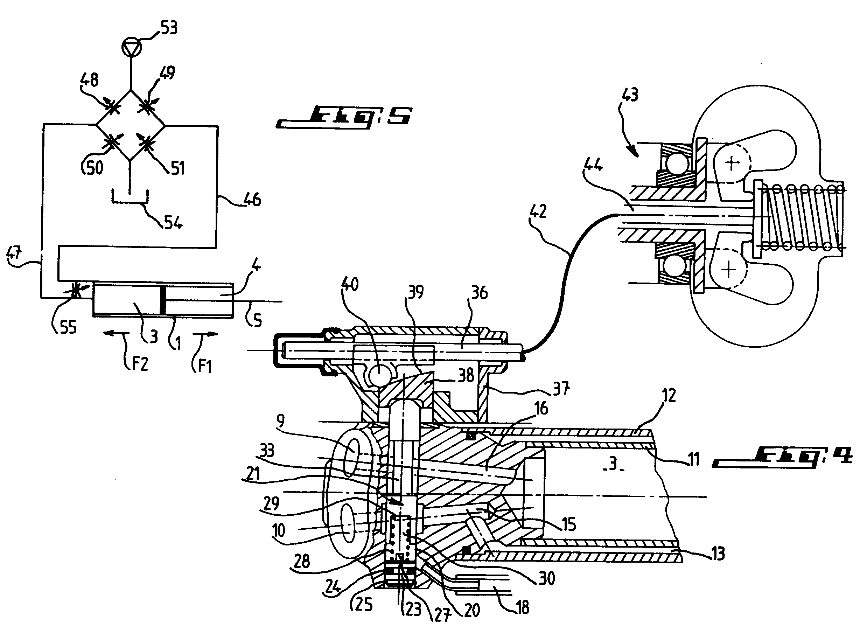

Comme il ressort des figures 2 à 4, la tête de vérin 7 est traversée diamétralement par un alésage rodé diamétral 20 qui traverse les conduits 15 et 16 et dans lequel est disposé de façon axialement mobile un tiroir 21 qui s'engage dans l'alésage 20 à partir d'une extrémité de celui-ci. L'autre extrémité de l'alésage est obturée par un bouchon 23. L'étanchéité est assurée par un joint torique 24 et le maintien de l'ensemble se fait par un circlips 25. Le bouchon 23 porte sur son extrémité interne un téton 27 de centrage d'un ressort hélicoïdal 28 qui prend appui par une extrémité sur la face interne du bouchon 23 et par son autre extrémité sur le fond 29 d'un évidement cylindrique axial 30 pratiqué dans le tiroir 21 en regard du téton 27. Le tiroir 21 est axialement déplaçable dans l'alésage 20, à l'encontre du ressort 28, sous l'effet d'un organe de commande schématiquement indiqué en 32.

Comme le montrent les figures, le tiroir 21 présente une partie centrale cylindrique de plus faible diamètre 33 qui est conformée de telle façon qu'il met en pleine communication les conduits 15 et 16 lorsque le tiroir occupe sa position enfoncée, avec compression maximale du ressort 28 (figure 3), et interdit une telle communication lorsqu'il occupe son autre position extrême (figure 2). La mise en communication des conduits se fait progressivement au fur et à mesure de l'enfoncement du tiroir 21 dans son alésage 20. Il convient de noter qu'en position d'isolement des conduits 15 et 16, l'étanchéité entre ceux-ci est réalisée par le jeu extrêmement réduit (de l'ordre de quelques microns) entre le tiroir et l'alésage.

Le dispositif de commande 32 qui régule le coulissement du tiroir 21 dans son alésage 20, dans le mode de réalisation représenté aux figures 2 et 3, est formé par un moteur pas à pas commandé par une centrale électrique 33 tel qu'un calculateur qui reçoit des informations d'au moins un capteur de mesure indiqué schématiquement en 34.

Dans le mode de réalisation conforme à l'invention, selon la figure 4, le dispositif de commande est formé par un système mécanique qui comprend un organe 36 qui est monté mobile perpendiculairement à l'axe du tiroir 21 dans un support 37 pour effectuer un mouvement rectiligne de va et vient et est susceptible de repousser le tiroir axialement dans son alésage 20 lors de son déplacement, par l'intermédiaire d'un élément 38 coiffant l'extrémité externe du tiroir. Cet élément 38 présente une surface externe 39 en forme d'une rampe avec laquelle coopère un élément 40 tel que par exemple une bille qui est associée à l'organe mobile 36. Lors du déplacement de ce dernier, la bille repousse le tiroir dans l'alésage en se déplaçant sur la rampe 39. L'orange 36 est déplacé par un câble 42 relié à un système dépendant d'un paramètre tel qu'un régulateur centrifuge connu en soi impliquant un déplacement d'un organe indiqué en 44 qui fait partie du dispositif 43. Il est évidemment possible de faire agir directement le câble 42 sur le tiroir 21 à l'encontre d'un ressort, à condition que le tiroir soit aménagé de manière à relier hydrauliquement les chambres 3 et 4 quand il est tiré.

On comprend aisément qu'en déplaçant le tiroir 21 dans son alésage 20 et en mettant en communication les chambres 3 et 4 du vérin, par l'intermédiaire des conduits 15 et 16, on obtient une variation de la poussée du vérin.

La figure 5 illustre schématiquement une application d'un vérin hydraulique selon l'invention à un véhicule automobile, pour la réalisation d'une assistance variable de direction. Les deux chambres 3 et 4 du vérin sont reliées par des conduits 46, 47 à une vanne hydraulique se comportant comme un pont de valves constitué de quatre valves de 48 à 51 et interposé entre que pompe 53 et un réservoir 54 d'un fluide hydraulique. En 55 on a représentée le dispositif de mise en communication des deux chambres 3 et 4 du vérin selon l'invention, qui comprend un tiroir 21 tel que représenté aux figures 2 à 4. Pour un braquage dans le sens indiqué par la flèche F1, les valves 49 et 50 sont fermées tandis que les valves 48 et 51 sont ouvertes. Pour obtenir un braquage dans le sens de la flèche F2, il faut fermer les valves 48 et 51 et ouvrir le valves 49 et 50. La fonction d'assistance est déterminée par la position du tiroir de mise en communication 55 des deux chambres 3 et 4 du vérin. Lorsqu'il établit la communication, le fonction d'assistance diminue. La mise en communication des deux conduits et ainsi des deux chambres du vérin par le déplacement du tiroir dans son alésage permet une variation progressive du taux d'assitance. Ce dernier peut donc être modulé de façon continue selon par exemple la vitesse du véhicule où d'autres paramètres. Le paramètre 34 aux figures 2 et 3 serait alors la vitesse du véhicule. Les lois d'assistance sont facilement réglables, par exemple par un changement de la rampe 39 dans le mode de réalisation selon la figure 4 ou par un changement de logique du calculateur 33 aux figures 2 et 3.

## Revendications

1. Vérin hydraulique à force de poussée variable, du type comportant un piston (2) monté coulissant dans un corps de cylindre (1), muni d'une tige (6) traversant axialement ce corps et délimitant dans ce dernier deux chambres séparées (3, 4) dont chacune est alimentée séparément en fluide sous pression, et un dispositif de mise en communication des deux chambres par l'intermédiaire d'un organe commandé, l'extrémité (7) du vérin qui est opposée à celle (6) traversée axialement par la tige (5) étant configurée en tête de vérin pourvue d'une cavité (20) dans laquelle débouchent deux conduits (15, 16) chacun en communication avec l'une desdite chambres (3, 4) et est monté mobile ledit organe commandé (21) de façon à mettre progressivement en communication lesdites chambres (3, 4), caractérisé en ce qu'il comporte un dispositif de commande extérieur (32) pour la commande de l'organe commandé (21) et en ce que le dispositif de commande extérieur (32) comprend un organe (36) susceptible d'être entraîné selon un mouvement rectiligne de va-et-vient, qui occasionne le déplacement de l'organe commandé (21), par l'intermédiaire d'une pièce (38) pourvue d'une rampe (39) coopérant avec un élément tel qu'une bille (40) de l'organe (36).

2. Vérin hydraulique selon la revendication 1, caractérisé en ce que la tête de vérin (7) porte les raccords d'alimentation en fluide sous pression (9, 10) des chambres (3, 4) du vérin, chaque raccord communiquant avec l'un desdits conduits (15, 16), que la cavité précitée (20) est de forme cylindrique et l'organe commandé (21) est formé par un tiroir axialement mobile dans la cavité cylindrique qui est formé par un alésage qui traverse les conduits (15 et 16) et est fermé à une extrémité et en ce que le tiroir (21) s'engage dans l'alésage à partir de l'autre extrémité, sous l'effet du dispositif de commande (32), à l'encontre d'un moyen de rappel tel qu'un ressort (28).

3. Vérin hydraulique selon l'une des revendications 1 ou 2, caractérisé en ce que l'organe commandé (21) est monté déplaçable perpendiculairement à la direction de déplacement de l'organe (36).

4. Dispositif de direction assistée pour véhicule automobile, caractérisé en ce qu'elle comprend un vérin hydraulique selon l'une des revendications précédentes, dont le tiroir (21) est mobile sous l'action d'un paramètre (34) de conduite du véhicule, avantageusement la vitesse de celui-ci.

5. Dispositif de direction assistée selon la revendication 4, caractérisé en ce que le dispositif de commande du tiroir (21) comprend un régulateur centrifuge (43) adapté pour assurer le déplacement de l'organe (36) précité du dispositif de commande extérieur (32).

## Patentansprüche

1. Hydraulischer Kraftzylinder mit veränderlicher Schubkraft, derjenigen Gattung mit einem in einem Zylinderkörper (1) gleitbar angeordneten, mit einer diesen Körper axial durchsetzenden Stange (6) versehenen und in diesem letzteren zwei getrennte Kammern (3, 4) abgrenzenden Kolben (2), von welchen jede getrennt mit einem Druckmittel gespeist wird und einer Vorrichtung, um die beiden Kammern über ein gesteuertes Glied in Verbindung zu setzen, wobei dasjenige Ende (7) des Kraftzylinders, das demjenigen (6), welches durch die Stange (5) axial durchsetzt wird, als Kraftzylinderkopf gestaltet ist, der mit einem Hohlraum (20), in welchen zwei Kanälen (15, 16) einmünden, versehen steht, wobei jeder mit einer der besagten Kammern (3, 4) in Verbindung ist und das besagte gesteuerte Glied (21) bewegbar angeordnet ist, um die besagten Kammern (3, 4) fortschreitend in Verbindung zu setzen, dadurch gekennzeichnet, dass er eine äussere Betätigungsvorrichtung (32) für die Steuerung des gesteuerten Gliedes (21) aufweist und dass die äussere Betätigungsvorrichtung (32) ein gemäss einer hin und hergehenden geradlinigen Bewegung antreibbares Glied (36) aufweist, welches die Verschiebung des gesteuerten Gliedes (21) über ein mit einer mit einem Element wie einer Kugel (40) des Gliedes (36) zusammenwirkenden Rampe (39) versehenes Stück (38) verursacht.

2. Hydraulischer Kraftzylinder gemäss Anspruch 1, dadurch gekennzeichnet, dass der Kraftzylinderkopf (7) die Anschlussstücke (9,10) zur Speisung der Kammern (3,4) des Kraftzylinders mit Druckmittel trägt, wobei jedes Anschlussstück mit einem der besagten Kanälen (15, 16) in Verbindung steht, dass der vorgenannte Hohlraum (20) zylindrischer Gestalt ist und das gesteuerte Glied (21) durch einen in dem zylindrischen Hohlraum axial beweglichen Schieber gebildet wird, der durch eine Bohrung, die die Kanäle (15 und 16) durchsetzt, gebildet wird und an einem Ende geschlossen ist und dass der Schieber (21) in die Bohrung von dem anderen Ende ab unter der Wirkung der Betätigungsvorrichtung (32) entgegen eines Rückstellmittels wie einer Feder (28) eingeführt wird.

3. Hydraulischer Kraftzylinder nach einem der Ansprüche 1 oder 2, dadurch gekennzeichnet, dass das gesteuerte Glied (21) senkrecht zu der Bewegungsrichtung des Gliedes (36) bewegbar angeordnet ist.

4. Lenkhilfevorrichtung für einen Kraftfahrzeug, dadurch gekennzeichnet, dass sie einen hydraulischen Kraftzylinder gemäss einem der vorangehenden Ansprüche aufweist, dessen Schieber (21) unter der Wirkung eines Fahrparameters (34) des Fahrzeugs, vorteilhaft der Geschwindigkeit desselben beweglich ist.

5. Lenkhilfevorrichtung nach Anspruch 4, dadurch gekennzeichnet, dass die Vorrichtung zur Betätigung des Schiebers (21) einen zur Gewährleistung der Verschiebung des vorgenannten Gliedes (36) der äusseren Betätigungsvorrichtung (32) angepassten Fliehkraftregler (43) umfasst.

## Claims

1. Hydraulic jack with a variable thrust force, of the type comprising a piston (2) slidably mounted in a cylinder body (1), provided with a rod (6) extending axially through this body while defining in the latter two separate chambers (3, 4) each one of which is separately fed with fluid under pressure and a device for putting in communication both chambers through the medium of a controlled member, that end (7) of the jack which is opposite to that (6) through which the rod (5) extends axially being shaped as a jack head provided with a cavity (20) into which are opening two ducts (15, 16) each one in communication with one of the said chambers (3, 4) and the said controlled member (21) is movably mounted so as to put the said chambers (3, 4) gradually in communication, characterized in that it comprises an outside operating device (32) for the control of the controlled member (21) and in that the outside operating device (32) comprises a member (36) likely to be driven according a rectilinear back-and-forth motion which causes the displacement of the controlled member (21) through the medium of a part (38) provided with a ramp (39) cooperating with an element such as a ball (40) of the member (36).

2. Hydraulic jack according to claim 1, characterized in that the jack head (7) carries the connecting fittings (9,10) for feeding the chambers (3,4) of the jack with fluid under pressure, each connecting fitting communicating with one of the said ducts (15, 16), in that the aforesaid cavity (20) has a cylindrical shape and the controlled member (21) is formed of a spool axially movable in the cylindrical cavity which is formed of a bore which extends through the ducts (15 and 16) and is closed at one end and in that the spool (21) inserts itself into the bore from the other end under the effect of the operating device (32) against a return means such as a spring (28).

3. Hydraulic jack according to one of claims 1 or 2, characterized in that the controlled member (21) is mounted in displaceable relationship perpendicularly to the direction of displacement of the member (36).

4. Power-assisted steering device for an automotive vehicle, characterized in that it comprises a hydraulic jack according to one of the foregoing claims the spool (21) of which is movable under the action of a parameter (34) of the driving of the vehicle advantageously of the speed of the latter.

5. Power-assisted steering device according to claim 4, characterized in that the device for operating the spool (21) comprises a centrifugal governor (43) adapted to ensure the displacement of the aforesaid member (36) of the outside operating device (32).
